# EUROPÄISCHE PATENTSCHRIFT

(11) **EP 4 653 329 B1**
(45) Veröffentlichungstag und Bekanntmachung des Hinweises auf die Patenterteilung: **23.09.2026**
(21) Anmeldenummer: 24177228.4
(22) Anmeldetag: 22.05.2024
(51) Int. Cl.: B65B 5/10, B65B 9/04, B65B 11/52, B65B 37/00, B65B 57/14, B65B 59/00, B65B 59/02, B65B 65/02, B65G 54/02

(54) **ZUFÜHRVORRICHTUNG UND VERFAHREN ZUM ZUFÜHREN UND EINFÜGEN VON PRODUKTEN IN PRODUKTAUFNAHMEN**
FEEDING DEVICE AND METHOD FOR FEEDING AND INSERTING PRODUCTS INTO PRODUCT RECEPTACLES
DISPOSITIF D'ALIMENTATION ET PROCÉDÉ D'ALIMENTATION ET D'INSERTION DE PRODUITS DANS DES LOGEMENTS DE PRODUITS

(43) Veröffentlichungstag der Anmeldung: 26.11.2025
(73) Patentinhaber: Uhlmann Pac-Systeme GmbH & Co. KG, 88471 Laupheim (DE)
(72) Erfinder: Werner, Johannes, 88471 Laupheim (DE)
(74) Vertreter: Wächter, Jochen

(56) Entgegenhaltungen:
- EP-A1- 1 588 944
- EP-A1- 3 656 684
- EP-B1- 2 271 551
- WO-A1-2022/136518
- WO-A1-2023/170710
- WO-A1-97/11884
- CN-A- 110 422 381
- US-A1- 2005 000 192
- US-A1- 2023 047 973

## Beschreibung

Die vorliegende Erfindung betrifft eine Zuführvorrichtung und ein Verfahren zum Zuführen von Produkten, insbesondere von medizinischen oder pharmazeutischen Produkten, Nahrungs- oder Nahrungsergänzungsmitteln, und Einfügen der Produkte in Produktaufnahmen. Als Schüttgut bereitgestellte Produkte werden häufig in geringen Stückzahlen oder vereinzelt in Produktaufnahmen verpackt, wie zum Beispiel in einer Blisterpackung, einem Tray oder dergleichen. Hierzu werden die Produkte üblicherweise als Schüttgut zugeführt, vereinzelt und in die Produktaufnahmen eingelegt. Dem Fachmann sind verschiedene Ausführungsformen von geeigneten Zuführvorrichtungen bekannt, die in Abhängigkeit von Faktoren, wie zum Beispiel der Komplexität der Produkte, der Ausbildung der Produktaufnahmen und wirtschaftlichen Gesichtspunkten entsprechend ausgewählt werden.

Eine Bauart einer solchen Zuführvorrichtung ist eine sogenannte Einbürstzuführung, bei der Einbringeinrichtungen in Form von rotierenden Bürsten und Rührern die Produkte in die Produktaufnahmen einstreifen. Dabei sind beispielsweise jeweils mehrere Rührer um eine Drehachse verteilt angeordnet. Diese Rührer werden auf einer vorgegebenen, im Wesentlichen kreisförmigen Bewegungsbahn um die Drehachse bewegt. Dies hat zur Folge, dass die Produkte in Abhängigkeit von der Bewegungsrichtung der Produktaufnahmen und von der Position, in der sie von den Rührern erfasst werden, relativ zu den Produktaufnahmen unterschiedlich stark beschleunigt werden. Bei großer Beschleunigung bzw. Relativgeschwindigkeit kann dies dazu führen, dass die Produkte beispielsweise über eine Produktaufnahme hinweg und nicht in diese hinein befördert werden. Des Weiteren gibt es Bereiche, die weniger oft von den Rührern überstreift werden als andere. Diese und weitere Aspekte können dazu führen, dass kein zufriedenstellender Füllgrad der Produktaufnahmen erreicht wird. Eine Anpassung an unterschiedliche Formate ist nur bedingt möglich, sodass die Zuführvorrichtung nicht in jedem Fall optimal ausgenutzt werden kann, und bedarf in der Regel einer Umrüstung der Zuführvorrichtung.

WO 97/11884, CN 110 422 381, EP 2 271 551, US 2005/000192, EP 1 588 944 offenbaren alternative Lösungen für die Zuführung von Produkten in Aufnahmetaschen, die Einbringungsvorrichtungen umfassen, die von linear bewegten Bändern (WO 97/11884) über rotierende Teller (CN 110 422 381, EP 2 271 551) bis hin zu sich hin und her bewegenden Lamellen/ Bürsten (US 2005/000192, EP 1 588 944) variieren.

Es ist eine Aufgabe der vorliegenden Erfindung, eine Zuführvorrichtung und ein Verfahren zum Zuführen und Einfügen von Produkten in Produktaufnahmen bereitzustellen, die einen 14692 P 1231 EP einfachen Aufbau, einen flexiblen Einsatz und eine hohe Effizienz der Zuführvorrichtung ermöglichen.

Diese Aufgabe wird durch den Gegenstand der unabhängigen Ansprüche 1 und 13 gelöst. Bevorzugte Ausführungsformen sind Gegenstand der abhängigen Ansprüche.

Eine erfindungsgemäße Zuführvorrichtung zum Zuführen von Produkten, insbesondere von medizinischen oder pharmazeutischen Produkten, Nahrungs- oder Nahrungsergänzungsmitteln, und Einfügen der Produkte in Produktaufnahmen umfasst:
eine Füllstrecke, entlang derer die Produktaufnahmen in einer Transportebene in eine Transportrichtung bewegbar sind;
eine Zuführung zum Zuführen der Produkte zur Füllstrecke; und
zumindest eine Einbringeinrichtung, die dazu eingerichtet ist, die Produkte in die Produktaufnahmen zu schieben, und die zumindest in einer Ebene parallel zur Transportebene frei beweglich ist.

Auf diese Art und Weise wird eine Zuführvorrichtung bereitgestellt, bei der die Position und das Bewegungsprofil der zumindest einen Einbringeinrichtung beliebig eingestellt werden können, um eine Anpassung an unterschiedliche Formate zu ermöglichen und das Einbringen der Produkte in die Produktaufnahmen zu optimieren, was wiederum zu einem gleichmäßigen und ausreichenden Füllgrad sowie zu einer hohen Effizienz führt.

Im Allgemeinen sind die Produkte bevorzugt einnehmbare oder lösliche Produkte, wie medizinische Produkte oder pharmazeutische Produkte, wie z.B. Arzneimittel, Nahrungsmittel oder Nahrungsergänzungsmittel. Bei den einnehmbaren Produkten handelt es sich bevorzugt um Solida, wie zum Beispiel Tabletten, Dragées oder Kapseln. Bei den Lebensmitteln kann es sich beispielsweise um Solida in Form von Kaugummis, Pastillen, Bonbons oder dergleichen handeln. Bei den Nahrungsergänzungsmitteln handelt es sich z.B. um Mineralien, Vitamine, Fettsäuren oder dergleichen in Tabletten- oder Kapselform. Es kann sich aber grundsätzlich auch um andere Produkte handeln, die in entsprechende Produktaufnahmen verpackt werden sollen. Die Produkte werden vorzugsweise als Schüttgut bereitgestellt und mittels der Zuführung einem Eingangsbereich der Füllstrecke zugeführt.

Die Produktaufnahmen sind vorzugsweise gebildet durch Blisterhöfe, die in einer Formfolie (Blisterbahn) ausgebildet sind, oder durch Kavitäten eines Trays. Weiter bevorzugt sind die Produktaufnahmen derart ausgebildet, dass sie jeweils genau ein Produkt aufnehmen. Hierzu können die Produkte und die Produktaufnahmen korrespondierende Formen aufweisen, um die Aufnahme mehrerer Produkte in einer Produktaufnahme zu vermeiden. Grundsätzlich können die Produktaufnahmen getaktet oder kontinuierlich entlang der Füllstrecke bewegt werden. Bei getaktetem Betrieb bewirkt eine darauf angepasste, getaktete Bewegung der zumindest einen Einbringeinrichtung parallel zur Transportrichtung vorteilhafterweise eine Reduzierung der Relativgeschwindigkeit zwischen den Produkten und den Produktaufnahmen.

Die zumindest eine Einbringeinrichtung ist in der Ebene parallel zur Transportebene frei beweglich, weist also in dieser Ebene zwei Freiheitsgrade (Translationsfreiheitsgrade) auf. Dadurch ist die Einbringeinrichtung nicht auf eine vorbestimmte Position oder Bewegungsbahn beschränkt. Gleichwohl kann die zumindest eine Einbringeinrichtung in eine beliebige Position gebracht werden, im Betrieb der Zuführvorrichtung in dieser verweilen und sich z.B. drehen. Vorzugsweise ist die zumindest eine Einbringeinrichtung um eine Achse senkrecht zur Transportebene drehbar (Rotationsfreiheitsgrad). Mithin kann die Einbringeinrichtung bevorzugt in der Ebene in jede beliebige Richtung bewegt werden, um eine gewünschte Position einzunehmen oder eine gewünschte Bewegungsbahn abzufahren.

In einer besonders bevorzugten Ausführungsform weist die zumindest eine Einbringeinrichtung sechs Freiheitsgrade auf. Neben den bereits beschriebenen Freiheitsgraden kann die zumindest eine Einbringeinrichtung dann einen dritten Translationsfreiheitsgrad senkrecht zur Transportebene aufweisen. Dadurch kann ein Abstand zur Transportebene bzw. zu den Produktaufnahmen eingestellt werden. Zudem kann die zumindest eine Einbringeinrichtung zwei weitere Rotationsfreiheitsgrade aufweisen, wodurch die zumindest eine Einbringeinrichtung bezüglich der Transportebene gekippt werden kann. Dies erhöht die Bewegungsvielfalt bei der Handhabung der Produkte mittels der Einbringeinrichtung. Zum Beispiel kann durch das Kippen der zumindest einen Einbringeinrichtung ein nicht korrekt in eine Produktaufnahme eingefügtes Produkt, wie ein verklemmtes oder ein in eine bereits gefüllte Produktaufnahme eingefügtes Produkt, aus der Produktaufnahme gehebelt werden.

Die zumindest eine Einbringeinrichtung muss aber nicht zwingend alle sechs Freiheitsgrade aufweisen. Sie kann beispielsweise auch nur die beiden Translationsfreiheitsgrad in der Ebene parallel zur Transportebene in Kombination mit einem oder mehreren der weiteren beschriebenen Freiheitsgrade aufweisen. Besonders bevorzugt weist die zumindest eine Einbringeinrichtung mindestens drei Freiheitsgrade auf, nämlich die zwei Translationsfreiheitsgrade in der Ebene parallel zur Transportebene sowie einen Rotationsfreiheitsgrad um eine Achse senkrecht zur Transportebene.

Vorzugsweise umfasst die Zuführvorrichtung weiterhin eine Steuereinrichtung, die dazu eingerichtet ist, die zumindest eine Einbringeinrichtung gemäß einem Bewegungsprofil anzusteuern, das variabel einstellbar ist. Dadurch kann das Bewegungsprofil der zumindest einen Einbringeinrichtung angepasst und optimiert werden, ohne dass ein mechanischer Umbau der Zuführvorrichtung erforderlich ist. Dies wiederum führt zu einem flexiblen und effizienten Einsatz der Zuführvorrichtung.

Das Bewegungsprofil umfasst bevorzugt zumindest eines aus einer Position oder Bewegungsbahn, einer Bewegungsform und einem Geschwindigkeitsprofil der zumindest einen Einbringeinrichtung. Die Bewegungsbahn ist vorzugsweise in der Ebene parallel zur Transportebene definiert, gegebenenfalls auch mit einer Komponente senkrecht zu dieser, und dient beispielsweise dazu, die zumindest eine Einbringeinrichtung in eine bestimmte Position zu bringen und/oder durch wiederholtes Bewegen entlang dieser Bewegungsbahn Produkte im Bereich der Bewegungsbahn in die Produktaufnahmen zu schieben bzw. einzubringen. Bei der Bewegungsform kann es sich um eine translatorische Bewegung oder eine rotatorische Bewegung handeln, die auch überlagert werden können. Die Bewegungsform kann auch das Vibrieren der zumindest einen Einbringeinrichtung umfassen. Das Geschwindigkeitsprofil kann eine Geschwindigkeit, Beschleunigung und/oder Verzögerung der zumindest einen Einbringeinrichtung umfassen, insbesondere entlang der Bewegungsbahn. Das Bewegungsprofil der zumindest einen Einbringeinrichtung kann beispielsweise dergestalt sein, dass sich die Einbringeinrichtung in einer bestimmten Position um eine Achse senkrecht zur Transportebene mit konstanter Geschwindigkeit dreht. Dabei kann die Einbringeinrichtung während des Betriebs der Zuführvorrichtung stationär in der bestimmten Position verbleiben oder zusätzlich entlang der Bewegungsbahn bewegt werden.

In einer bevorzugten Ausführungsform ist die Steuereinrichtung dazu eingerichtet, das Bewegungsprofil basierend auf einer ersten Größe und/oder basierend auf einer zweiten Größe einzustellen. Die erste Größe ist vorzugsweise kennzeichnend für eine Ausbildung der Produktaufnahmen, insbesondere für eine geometrische Form, eine Orientierung und/oder eine Anordnung der Produktaufnahmen. Beispielsweise kann das Bewegungsprofil der zumindest einen Einbringeinrichtung derart eingestellt werden, dass die zumindest eine Einbringeinrichtung entsprechend der Orientierung der Produktaufnahmen ausgerichtet ist, und sich derart relativ zu den Produktaufnahmen bewegt, dass die Produkte entsprechend ausgerichtet werden und in die Produktaufnahmen fallen. Die Anordnung der Produktaufnahmen kann weiterhin mit dem Format beispielsweise der zu erzeugenden Blisterpackung oder der Formfolie, insbesondere mit deren Breite, korrespondieren und das Bewegungsprofil kann in Abhängigkeit von dem Format eingestellt werden, insbesondere um die gesamte Breite der Formfolie abzudecken. Die zweite Größe ist vorzugsweise kennzeichnend für eine Anordnung der Produkte, insbesondere für eine Verteilung der Produkte entlang der Füllstrecke und/oder einen Füllgrad der Produktaufnahmen, also der Anordnung der Produkte in den Produktaufnahmen. Beispielsweise kann die Bewegungsbahn der zumindest einen Einbringeinrichtung angepasst werden, um eine Verteilung der Produkte und somit den Füllgrad zu optimieren. Insgesamt ermöglicht die Einstellung des Bewegungsprofils basierend auf der ersten und/oder zweiten Größe eine Anpassung an die tatsächlich vorliegenden Begebenheiten und an unterschiedliche Formate, ohne dass ein Umrüsten der Zuführvorrichtung erforderlich ist.

Die Steuereinrichtung ist bevorzugt dazu eingerichtet, das Bewegungsprofil automatisch und/oder basierend auf einer Nutzereingabe einzustellen. Dadurch ist das Bewegungsprofil möglichst zuverlässig und flexibel einstellbar.

Die Zuführvorrichtung kann eine Anzeige- und Bedieneinrichtung, auch als Benutzerschnittstelle oder HMI bezeichnet, umfassen, die das Eingeben der Nutzereingabe durch einen Bediener ermöglicht. Die Anzeige- und Bedieneinrichtung ist kommunizierend mit der Steuereinrichtung verbunden. Beispielsweise kann der Bediener Parameter des Bewegungsprofils, die erste Größe oder die zweite Größe eingeben. Alternativ können unterschiedliche Bewegungsprofile, beispielsweise in Form unterschiedlicher Programme, in einem Speicher der Steuereinrichtung hinterlegt sein und vom Bediener ausgewählt werden, beispielsweise in Abhängigkeit von dem zu verpackenden Produkt und/oder der ersten und/oder der zweiten Größe.

In einer bevorzugten Ausführungsform umfasst die Zuführvorrichtung weiterhin ein Detektionssystem, das dazu eingerichtet ist, die erste Größe und/oder die zweite Größe zu erfassen, und das kommunizierend mit der Steuereinrichtung verbunden ist. Die Steuereinrichtung kann dann dazu eingerichtet sein, das Bewegungsprofil der zumindest einen Einbringeinrichtung basierend auf der erfassten ersten und/oder zweiten Größe automatisch einzustellen oder dem Bediener ein geeignetes Bewegungsprofil vorzuschlagen.

Das Detektionssystem umfasst vorzugsweise mindestens einen Sensor, wie zum Beispiel einen optischen Sensor, wie eine Kamera, oder einen Ultraschallsensor. Verschiedene Sensoren zum Erfassen von Produkten, deren Zustand, Anordnung bzw. Verteilung und Orientierung sowie zum Erfassen eines Füllgrads von Produktaufnahmen mit Produkten sind dem Fachmann bekannt und können eingesetzt werden. So können zugeführte Produkte direkt gleichmäßig verteilt werden, was eine effizientere Nutzung der zumindest einen Einbringeinrichtung bewirkt und zu einer höheren Leistung der Zuführvorrichtung beiträgt.

Die Steuereinrichtung kann dazu eingerichtet sein, das Bewegungsprofil der zumindest einen Einbringeinrichtung zu optimieren. In einer Ausführungsform kann die Steuereinrichtung dazu eingerichtet sein, zu prüfen, ob die zweite Größe, insbesondere der Füllgrad der Produktaufnahmen, ein vorbestimmtes Kriterium erfüllt. Wird das vorbestimmte Kriterium nicht erfüllt, kann die Steuereinrichtung das Bewegungsprofil basierend auf vorgegebenen Regeln oder Algorithmen anpassen und erneut prüfen, ob die zweite Größe das vorbestimmte Kriterium nun erfüllt. Dieser Vorgang kann wiederholt werden, bis das vorbestimmte Kriterium erfüllt wird, beispielsweise ein vorgegebener Füllgrad erreicht wird.

Der Optimierungsvorgang kann, wie beschrieben, mittels eines Regelkreises erfolgen oder mittels künstlicher Intelligenz, insbesondere durch maschinelles Lernen. Im letzteren Fall ist die Steuereinrichtung oder eine andere mit dem Detektionssystem verbundene Recheneinheit dazu eingerichtet, das Bewegungsprofil unter Anwendung von Lernalgorithmen anzupassen. Als Trainingsdaten können Bewegungsprofile und von dem Detektionssystem erfasste Größen verwendet werden, die vorab in Trainingsdurchgängen beim Maschinenhersteller gewonnen werden und/oder die im Betrieb der Maschine beim Anwender gewonnen werden.

Es ist bevorzugt, dass die Steuereinrichtung dazu eingerichtet ist, eine Kraft zu erfassen, mit der die zumindest eine Einbringeinrichtung auf ein Produkt einwirkt. Dies kann beispielsweise durch einen geeigneten Sensor an der Einbringeinrichtung oder über eine für den Antrieb der Einbringeinrichtung erforderliche Kraft erfolgen. Dadurch kann zum einen bestimmt werden, ob die zumindest eine Einbringeinrichtung ein Produkt oder mehrere Produkte erfasst hat. Unabhängig davon kann eine schonende Handhabung der Produkte gewährleistet werden. Hierzu kann die Steuereinrichtung weiterhin dazu eingerichtet sein, eine Ausweichbewegung der zumindest einen Einbringeinrichtung einzuleiten, wenn die erfasste Kraft einen vorbestimmten Grenzwert überschreitet.

Die zumindest eine Einbringeinrichtung wird im Folgenden detaillierter beschrieben. In einer besonders bevorzugten Ausführungsform umfasst die zumindest eine Einbringeinrichtung eine Basiseinheit und eine Handhabungseinrichtung. Die Basiseinheit ist dazu eingerichtet, sich relativ zu einer Antriebsebene der Zuführvorrichtung zu bewegen. Die Handhabungseinrichtung ist an der Basiseinheit angebracht und dazu eingerichtet, die Produkte zu erfassen. Auf diese Art und Weise ergibt sich ein einfacher Aufbau, der zugleich einen sehr flexiblen Einsatz der Zuführvorrichtung ermöglicht. Die Handhabungseinrichtung kann integral mit der Basiseinheit ausgebildet sein oder fest mit dieser verbunden sein, z.B. an die Basiseinheit geschweißt, geklebt oder genietet sein. Bevorzugt ist die Handhabungseinrichtung jedoch lösbar mit der Basiseinheit verbunden, beispielsweise verschraubt, gesteckt oder magnetisch verbunden.

Vorzugsweise bilden die Antriebsebene und die Basiseinheit ein Planarantriebssystem. Insbesondere können die Antriebsebene und die Basiseinheit der Einbringeinrichtung magnetisch miteinander gekoppelt sein. Bevorzugt ist die Antriebsebene elektromagnetisch ausgebildet und die Basiseinheit umfasst mindestens einen Permanentmagnet, mehr bevorzugt eine Mehrzahl von Permanentmagneten. Die Antriebsebene kann z.B. eine Vielzahl von einzeln aktivierbaren Spulen umfassen. Dadurch kann die Einbringeinrichtung beliebig und im Wesentlichen uneingeschränkt entlang der Antriebsebene bewegt werden. Eine besonders widerstandsarme Bewegung der Einbringeinrichtung kann realisiert werden, wenn die Basiseinheit relativ zur Antriebsebene frei schwebt.

Gemäß dieser Ausführungsform kann die Basiseinheit trotz eines einfachen Aufbaus sechs Freiheitsgrade aufweisen, wie zuvor für die zumindest eine Einbringeinrichtung beschrieben. Insbesondere weist die Basiseinheit bezüglich der Antriebsebene drei Translationsfreiheitsgrade und drei Rotationsfreiheitsgrade auf.

Die Antriebsebene ist bevorzugt über der Transportebene sowie parallel zu dieser angeordnet. Die Antriebsebene kann beispielsweise als Teil eines Gehäuses der Zuführvorrichtung ausgebildet sein. Die Antriebsebene kann modular aufgebaut sein, beispielsweise aus Modulen in Form von einzelnen Feldern oder Kacheln. Auf diese Weise kann die Antriebsebene durch Aktivieren und Deaktivieren einzelner Module formatabhängig angepasst werden. Zum Beispiel kann die Breite der Antriebsebene und somit der Aktionsbereich der zumindest einen Einbringeinrichtung an die Breite der Füllstrecke bzw. der Formfolie angepasst werden.

Die Basiseinheit ist an bzw. in unmittelbarer Nähe zu der Antriebsebene angeordnet, insbesondere unterhalb der Antriebsebene. Die Handhabungseinrichtung ragt von der Basiseinheit in Richtung der Transportebene. Ein Abstand der Handhabungseinrichtung zur Transportebene bzw. den Produktaufnahmen ist vorzugsweise kleiner als eine Höhe der Produkte senkrecht zur Transportebene, um diese zuverlässig zu erfassen. Der Abstand der Handhabungseinrichtung zur Transportebene bzw. zu den Produktaufnahmen ist über den Abstand der Basiseinheit zur Antriebsebene einstellbar. So kann die Zuführvorrichtung einfach an unterschiedliche Produkte angepasst werden oder auch über Produkte hinweg bewegt werden, wenn der Abstand der Handhabungseinrichtung zur Transportebene bzw. den Produktaufnahmen größer als eine Höhe der Produkte senkrecht zur Transportebene eingestellt wird. Die Handhabungseinrichtung kann zudem mittels einer Aufnahme mit der Basiseinheit gekoppelt sein, um einen Wechsel der Handhabungseinrichtung zu ermöglichen.

Vorzugsweise umfasst die Handhabungseinrichtung eine Bürste oder zumindest ein Führungselement. Als Bürste kann die Handhabungseinrichtung eine Vielzahl von flexiblen Borsten aufweisen, die beispielsweise aus Kunststoff gebildet sind. Dadurch können die Produkte sehr schonend in die Produktaufnahmen geschoben werden. Das zumindest eine Führungselement kann derart ausgebildet sein, dass es einem Produkt bei Kontakt mit dem Produkt eine bestimmte Orientierung aufzwingt und/oder es in eine bestimmte Richtung führt. Dadurch wird ein zuverlässiges Einfügen und somit ein hoher Füllgrad ermöglicht. Das zumindest eine Führungselement kann flexibel ausgebildet sein, um die Produkte zu schonen, oder kann starr ausgebildet sein, um eine möglichst präzise Positionierung der Produkte zu ermöglichen. Besonders bevorzugt ist das zumindest eine flexible Führungselement aus einem Kunststoff, insbesondere aus einem Gummi gebildet. Die Handhabungseinrichtung kann auch eine Mehrzahl von Führungselementen umfassen, die beispielsweise parallel zueinander angeordnet sind, um wiederum eine Mehrzahl von Produkten parallel zueinander auszurichten, oder die schräg zueinander angeordnet sind, um Produkte in einem größeren Umfeld zu erfassen und einer bestimmten Position zuzuführen.

In einer besonders bevorzugten Ausführungsform umfasst die Zuführvorrichtung eine Mehrzahl von Einbringeinrichtungen, die einzeln ansteuerbar sind. Dadurch kann die Effizienz der Zuführvorrichtung erhöht werden. Jede Einbringeinrichtung der Mehrzahl von Einbringeinrichtungen kann gemäß der zuvor beschriebenen zumindest einen Einbringeinrichtung ausgebildet sein. Die Einbringeinrichtungen der Mehrzahl von Einbringeinrichtungen sind im Wesentlichen unabhängig voneinander frei beweglich. "Im Wesentlichen unabhängig voneinander" bedeutet dabei, dass die Einbringeinrichtungen individuell ansteuerbar und bewegbar sind, aber zum Beispiel eine Kollision vermieden wird. Jede Einbringeinrichtung kann unabhängig von den anderen ein individuelles Bewegungsprofil aufweisen. Mehrere Einbringeinrichtungen können aber auch aufeinander abgestimmte Bewegungsprofile aufweisen, beispielsweise um gemeinsam bestimmte Aufgaben zu erfüllen, wie das Einbürsten von Produkten durch eine Rotationsbewegung oder das Abführen von überschüssigen Produkten durch eine Translationsbewegung.

Es kann von Vorteil sein, dass die Einbringeinrichtungen wahlweise aktivierbar sind, um die Anzahl der im Einsatz befindlichen Einbringeinrichtungen anpassen zu können. Die Zuführvorrichtung kann einen mit der Antriebsebene in Verbindung stehenden Wartebereich umfassen, zum Beispiel in Form eines Magazins, in dem Einbringeinrichtungen geparkt werden können und aus dem sie bei Bedarf in eine Arbeitsposition bewegbar sind. Beispielsweise kann die Anzahl der im Einsatz befindlichen Einbringeinrichtungen entsprechend der Anzahl von aktivierten Modulen der Antriebsebene angepasst werden. Umgekehrt können nur so viele Einbringeinrichtungen verwendet werden, wie für das jeweilige Programm bzw. Format erforderlich, wodurch den eingesetzten Einbringeinrichtungen mehr Bewegungsraum zur Verfügung steht.

Im Allgemeinen kann die Zuführvorrichtung ein Gehäuse aufweisen, in das die leeren, zu füllenden Produktaufnahmen an einem Eingang eintreten und aus dem die befüllten Produktaufnahmen an einem Ausgang austreten. Die Füllstrecke erstreckt sich dann zwischen dem Eingang und dem Ausgang. Weiterhin kann das Gehäuse eine Öffnung für die Zuführung aufweisen, durch die die Produkte zur Füllstrecke gelangen. Bevorzugt umfasst die Zuführung mindestens einen Sammelbehälter, wie zum Beispiel einen Trichter, in dem die Produkte als Schüttgut aufgenommen sind, sowie eine oder mehrere Zuführmittel, wie zum Beispiel Rohre, Schläuche, (Vibrations-) Rinnen oder dergleichen, durch die die Produkte zur Füllstrecke gefördert werden.

Die Erfindung betrifft auch eine Verpackungsmaschine, insbesondere eine Blistermaschine, zum Verpacken von Produkten, insbesondere von medizinischen oder pharmazeutischen Produkten, Nahrungs- oder Nahrungsergänzungsmitteln, mit einer erfindungsgemäßen Zuführvorrichtung. In der bevorzugten Ausführungsform einer Blistermaschine sind die Produktaufnahmen vorzugsweise in Form von Höfen bzw. Näpfen in einer Formfolie ausgebildet, die in Transportrichtung durch die Zuführvorrichtung bewegt wird.

Bevorzugt umfasst die Blistermaschine weiterhin eine Formvorrichtung zum Formen der Produktaufnahmen in die Formfolie und eine Siegelvorrichtung zum Siegeln einer Deckfolie an die Formfolie zum Verschließen der Produktaufnahmen. Die Zuführvorrichtung ist dann zwischen der Formvorrichtung und der Siegelvorrichtung vorgesehen. Des Weiteren kann die Blistermaschine vor der Formvorrichtung eine Heizvorrichtung zum Erwärmen der Formfolie aufweisen. Nach der Siegelvorrichtung kann die Blistermaschine eine Trennvorrichtung, insbesondere eine Stanzvorrichtung, zum Heraustrennen von einzelnen Blisterpackungen aus dem Verbund von Formfolie und Deckfolie umfassen.

Die vorliegende Erfindung betrifft weiterhin ein Verfahren zum Zuführen von Produkten, insbesondere von medizinischen oder pharmazeutischen Produkten, Nahrungs- oder Nahrungsergänzungsmitteln, und Einfügen der Produkte in Produktaufnahmen, wobei das Verfahren die folgenden Schritte umfasst:
Zuführen der Produkte zu einer Füllstrecke, entlang derer die Produktaufnahmen in einer Transportebene in eine Transportrichtung bewegt werden,
Bewegen zumindest einer Einbringeinrichtung gemäß einem Bewegungsprofil und dadurch Einfügen der Produkte in die Produktaufnahmen, wobei die zumindest eine Einbringeinrichtung zumindest in einer Ebene parallel zur Transportebene frei beweglich ist.

Auf diese Art und Weise wird ein Verfahren bereitgestellt, bei dem die Position und das Bewegungsprofil der zumindest einen Einbringeinrichtung beliebig eingestellt werden können, um eine Anpassung an unterschiedliche Formate zu ermöglichen und das Einbringen der Produkte in die Produktaufnahmen zu optimieren, was wiederum zu einem gleichmäßigen und ausreichenden Füllgrad und zu einer hohen Effizienz führt.

Besonders bevorzugt wird das erfindungsgemäße Verfahren mittels der erfindungsgemäßen Zuführvorrichtung oder der Blistermaschine umfassend die Zuführvorrichtung ausgeführt und ist die Zuführvorrichtung dazu eingerichtet, das erfindungsgemäße Verfahren auszuführen. Die hierin bezüglich der Zuführvorrichtung und der Blistermaschine beschriebenen Merkmale sind daher auch auf das erfindungsgemäße Verfahren übertragbar und umgekehrt. Insbesondere betreffen die Merkmale der zumindest einen Einbringeinrichtung, gegebenenfalls in Zusammenhang mit der Antriebsebene, für sich und unabhängig von der Ausbildung der übrigen Komponenten der Zuführvorrichtung sowohl die Zuführvorrichtung als auch das Verfahren.

Der Schritt des Zuführens der Produkte zur Füllstrecke erfolgt vorzugsweise mittels der Zuführung. Das Bewegen der Produktaufnahmen in Transportrichtung erfolgt vorzugsweise mittels einer Fördereinrichtung, die beispielsweise die Formfolie mit darin ausgebildeten Produktaufnahmen in Transportrichtung bewegt.

Ist das Bewegungsprofil gemäß einer bevorzugten Ausführungsform variabel einstellbar, kann das Verfahren den Schritt des Einstellens des Bewegungsprofils der zumindest einen Einbringeinrichtung umfassen, vorzugsweise mittels der Steuereinrichtung. Das Einstellen des Bewegungsprofils kann wiederum automatisch oder basierend auf einer Nutzereingabe erfolgen. Dadurch ist das Verfahren flexibel an unterschiedlichste Produkte und Formate anpassbar.

Vorzugsweise umfasst das Verfahren weiterhin die Schritte:
Erfassen der ersten Größe, die kennzeichnend ist für eine Ausbildung der Produktaufnahmen, insbesondere für eine geometrische Form, eine Orientierung und/oder eine Anordnung der Produktaufnahmen, und/oder der zweiten Größe, die kennzeichnend ist für eine Anordnung der Produkte, insbesondere für eine Verteilung der Produkte entlang der Füllstrecke und/oder einen Füllgrad der Produktaufnahmen; und
Anpassen des Bewegungsprofils der zumindest einen Einbringeinrichtung basierend auf der erfassten ersten und/oder zweiten Größe.

Der Schritt des Erfassens der ersten Größe und/oder der zweiten Größe erfolgt bevorzugt mittels des Detektionssystems, wie zuvor beschrieben. Der Schritt des Anpassens des Bewegungsprofils erfolgt bevorzugt automatisch mittels der Steuervorrichtung, kann aber durch eine Nutzereingabe initiiert und/oder ergänzt werden.

Die Anpassung des Bewegungsprofils basierend auf der ersten und/oder zweiten Größe ermöglicht eine Anpassung an unterschiedliche Formate, ohne dass ein Umrüsten der Zuführvorrichtung erforderlich ist. Zudem kann das Verteilen und Einfügen der Produkte in Abhängigkeit von der tatsächlich vorliegenden Menge und Anordnung bzw. Verteilung der Produkte angepasst werden, um den Füllgrad zu optimieren.

Eine selbstständige Optimierung des Verfahrens kann realisiert werden, wenn das Verfahren weiterhin die Schritte umfasst:
Bestimmen, ob die zweite Größe ein vorbestimmtes Kriterium erfüllt, vorzugsweise mittels der Steuereinrichtung; und
falls die zweite Größe das vorbestimmte Kriterium nicht erfüllt, Wiederholen der Schritte des Erfassens der zweiten Größe, des Anpassens des Bewegungsprofils basierend auf der erfassten zweiten Größe, und des Bestimmens, ob das vorbestimmte Kriterium nun erfüllt wird, solange bis das vorbestimmte Kriterium erfüllt wird.

Werden die Produkte beispielsweise nicht gleichmäßig verteilt oder wird kein gleichmäßiger bzw. ausreichender Füllgrad erreicht, kann das Bewegungsprofil der zumindest einen Einbringeinrichtung so lange angepasst werden, bis die gewünschte Zielvorgabe in Form des vorbestimmten Kriteriums erreicht wird. Zum Beispiel kann ein (Standard-) Bewegungsprofil in der Steuereinrichtung hinterlegt sein und der zuvor beschriebene Optimierungszyklus nach der Montage der Zuführvorrichtung oder Blistermaschine zur Einstellung derselben durchgeführt werden. Es ist aber auch denkbar, dass der zuvor beschriebene Optimierungszyklus während des Betriebs der Zuführvorrichtung bzw. der Blistermaschine dauerhaft oder in vorbestimmten Intervallen durchgeführt wird.

In einer vorteilhaften Ausführungsform umfasst das Verfahren weiterhin die Schritte:
Erfassen, ob in einem Endbereich der Füllstrecke alle Produktaufnahmen gefüllt sind und sich noch überschüssige Produkte auf der Füllstrecke, beispielsweise auf der Formfolie, befinden; und
Befördern aller überschüssigen Produkte von der Füllstrecke mittels der zumindest einen Einbringeinrichtung.

Auf diese Art und Weise wird sichergestellt, dass sich keine Produkte mehr auf der Füllstrecke befinden und zu Fehlern in nachgelagerten Prozessen, wie zum Beispiel dem Siegeln der Deckfolie an die Formfolie, führen. Vielmehr bleiben die Produkte im geschlossenen System der Zuführvorrichtung und können beispielsweise der Füllstrecke wieder zugeführt werden. Des Weiteren kann auf eine Abschlussbürste verzichtet werden, die bei herkömmlichen Systemen am Ende der Füllstrecke verwendet wird, um das Austreten überschüssige Produkte zu verhindern. Mithin kann die Zuführvorrichtung dann komplett bürstenlos ausgebildet werden.

Bevorzugt erfolgt das Einbringen der Produkte in die Produktaufnahmen mittels zumindest einer ersten Einbringeinrichtung und das Befördern aller überschüssigen Produkte von der Füllstrecke mittels zumindest einer zweiten Einbringeinrichtung.

Schließlich kann das Verfahren weiterhin die Schritte umfassen:
Erfassen einer Kraft, die von der zumindest einen Einbringeinrichtung auf ein Produkt ausgeübt wird; und
Initiieren einer Ausweichbewegung der zumindest einen Einbringeinrichtung, wenn die erfasste Kraft einen vorbestimmten Grenzwert überschreitet.

Dadurch wird eine schonende Handhabung der Produkte gewährleistet.

Weitere Vorteile und Merkmale der vorliegenden Erfindung werden nachfolgend unter Bezugnahme auf die beigefügten Figuren beschrieben.
- Fig. 1: zeigt schematisch eine Blistermaschine in einer perspektivischen Ansicht.
- Fig. 2: zeigt schematisch eine erfindungsgemäße Zuführvorrichtung in einer Seitenansicht.
- Fig. 3: zeigt schematisch die Zuführvorrichtung nach Fig. 2 in einer Draufsicht.
- Fig. 4: zeigt schematisch eine Ausführungsform einer Einbringeinrichtung der erfindungsgemäßen Zuführvorrichtung in einer Seitenansicht.
- Fig. 5, 6: zeigen schematisch zwei unterschiedliche Ausführungsformen einer Einbringeinrichtung der erfindungsgemäßen Zuführvorrichtung in einer Seitenansicht.
- Fig. 7a-f: zeigen schematisch Varianten der Einbringeinrichtung nach Fig. 6 in einer Draufsicht.

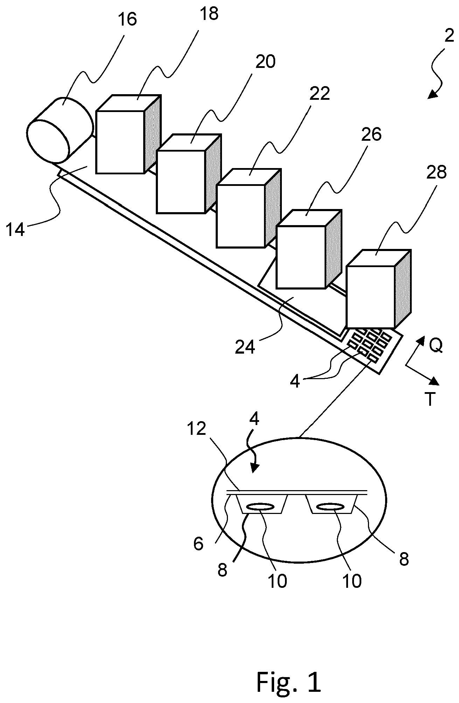

In Fig. 1 sind eine Blistermaschine 2 zum Herstellen von Blisterpackungen 4 in einer perspektivischen Ansicht sowie eine Blisterpackung 4 in einer Detailansicht schematisch dargestellt. Jede Blisterpackung 4 umfasst mindestens eine in einer Formfolie 6 ausgebildete Produktaufnahme 8 in Form eines Blisterhofs zur Aufnahme von Produkten 10. An die Formfolie 6 kann eine Deckfolie 12 gesiegelt sein, um die Produktaufnahmen 8 zu verschließen. In jeder Produktaufnahme 8 ist bevorzugt genau ein Produkt 10 aufgenommen, bei dem es sich insbesondere um ein einnehmbares medizinisches oder pharmazeutisches Produkt, ein Nahrungs- oder Nahrungsergänzungsmittel in Form einer Tablette, einer Kapsel, eines Dragees oder dergleichen handelt.

In der dargestellten Ausführungsform der Blistermaschine 2 weist diese eine Mehrzahl von Bearbeitungsstationen bzw. -vorrichtungen auf, wie nachfolgend genauer beschrieben. Es versteht sich jedoch, dass die vorliegende Erfindung nicht auf eine Verpackungs- bzw. Blistermaschine beschränkt ist.

Die Formfolie 6 kann eine thermoplastische Folie sein, in der die Produktaufnahmen 8 durch Thermoformen gebildet werden, oder eine Folie, z.B. aus Aluminium, in die die Produktaufnahmen tiefgezogen sind. Die Formfolie 6 kann in Form einer Formfolienbahn 14 vorzugsweise auf einer Vorratsrolle 16 bereitgestellt werden. Die Blistermaschine 2 kann optional, wenn es sich um eine thermoplastische Folie handelt, eine Heizvorrichtung 18 zum Erwärmen der Formfolienbahn 14 sowie eine Formvorrichtung 20 zum Formen der Produktaufnahmen 8 in die Formfolienbahn 14 umfassen. In einer Zuführvorrichtung 22 können die Produkte 10 den Produktaufnahmen 8 zugeführt und in diese eingefügt werden. Anschließend können die Produktaufnahmen 8 verschlossen werden, vorzugsweise durch Siegeln einer Deckfolienbahn 24 an die Formfolienbahn 14 in einer Siegelvorrichtung 26 der Blistermaschine 2. Die Deckfolie 8 ist folglich in Form der Deckfolienbahn 24 bereitgestellt, vorzugsweise ebenfalls auf einer Vorratsrolle (nicht dargestellt), die der Formfolienbahn 14 von oben zugeführt wird.

Weiterhin umfasst die Blistermaschine 2 eine Trennvorrichtung 28 zum Heraustrennen der einzelnen Blisterpackungen 4 aus der Formfolienbahn 14 bzw. aus dem Verbund aus Formfolienbahn 14 und Deckfolienbahn 24. Die Trennvorrichtung 28 ist vorzugsweise als Stanzvorrichtung ausgebildet. Nach der Trennvorrichtung 28 liegen die Blisterpackungen 4 vereinzelt vor und werden mittels einer Übergabeeinrichtung (nicht dargestellt), wie zum Beispiel sogenannten Pickern, weiteren Verarbeitungsschritten zugeführt.

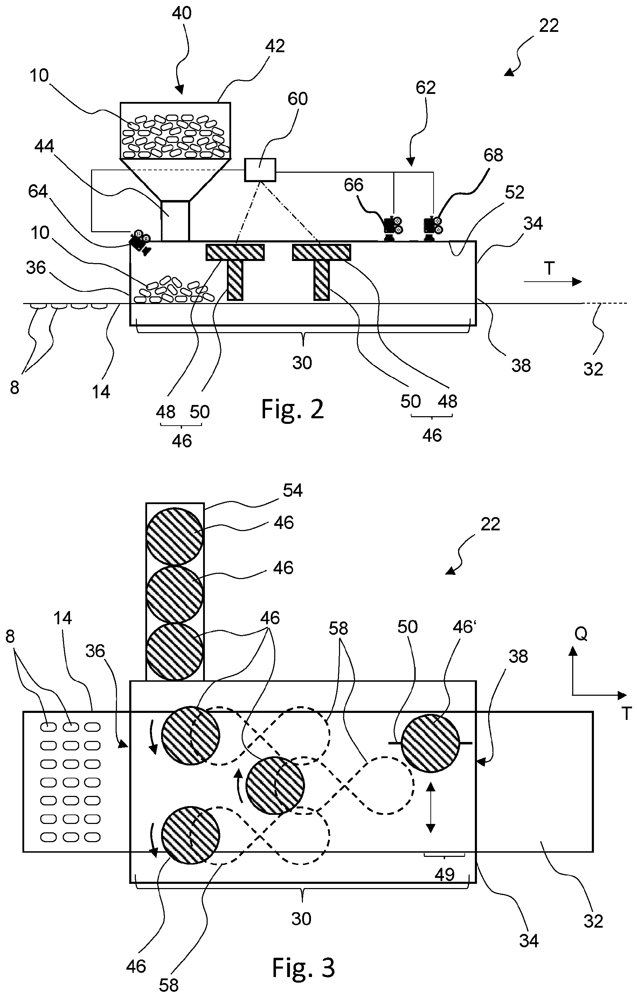

In Fig. 2 und 3 ist eine Ausführungsform der erfindungsgemäßen Zuführvorrichtung 22 zum Zuführen der Produkte 10 und Einfügen der Produkte 10 in die Produktaufnahmen 8 schematisch dargestellt. In der dargestellten Ausführungsform sind die Produktaufnahmen 8 durch Blisterhöfe in der Formfolienbahn 14 gebildet, von denen nur wenige exemplarisch gezeigt sind. Es versteht sich, dass die Blisterhöfe im Bereich der Zuführvorrichtung 22 bevorzugt über die gesamte Länge und Breite der Formfolienbahn 14 ausgebildet sind. Die Beschreibung der Zuführvorrichtung 22 trifft aber analog auch auf alternative Ausführungsformen zu, in denen die Produktaufnahmen 8 beispielsweise durch Kavitäten in einem oder in mehreren Trays oder dergleichen gebildet sind.

Die Zuführvorrichtung 22 umfasst eine Füllstrecke 30, entlang derer die Produktaufnahmen 8 in einer Transportebene 32 in eine Transportrichtung T bewegt werden. Im Bereich der Füllstrecke 30 werden die Produktaufnahmen 8 mit den Produkten 10 befüllt. Die Füllstrecke 30 ist bevorzugt in einem Gehäuse 34 der Zuführvorrichtung 22 vorgesehen und kann sich von einem Eingang 36 zu einem Ausgang 38 des Gehäuses 34 erstrecken. Vorzugsweise durchläuft die Formfolienbahn 14 die Zuführvorrichtung 22 in der Transportebene 32 in Transportrichtung T, insbesondere vom Eingang 36 zum Ausgang 38.

Die Zuführvorrichtung 22 umfasst weiterhin eine Zuführung 40 zum Zuführen der Produkte 10 zur Füllstrecke 30. Die Zuführung 34 kann einen Sammelbehälter 42, beispielsweise in Form eines Trichters, zur Aufnahme der als Schüttgut bereitgestellten Produkte 10 sowie zumindest ein Zuführmittel 44, beispielsweise in Form eines Rohrs oder einer Vibrationsrinne, zum Fördern der Produkte 10 zur Füllstrecke 30 aufweisen.

Die Zuführvorrichtung 22 umfasst weiterhin zumindest eine Einbringeinrichtung 46, die dazu eingerichtet ist, die Produkte 10 in die Produktaufnahmen 8 zu schieben. Hierzu erfasst die zumindest eine Einbringeinrichtung 46 ein Produkt 10 und schiebt dieses relativ zu einer Produktaufnahme 8, insbesondere relativ zur Formfolienbahn 14, in die Produktaufnahme 8. Dabei kann es aufgrund der großen Relativgeschwindigkeiten auch dazu kommen, dass das Produkt 10 vom der Einbringeinrichtung 46 abprallt und durch diesen Stoß in eine Produktaufnahme 8 eingefügt wird. Die zumindest eine Einbringeinrichtung 46 ist zumindest in einer Ebene parallel zur Transportebene 32 frei beweglich, wodurch sich ihre Position und ihr Bewegungsprofil im Bereich der Füllstrecke 30 beliebig einstellen lässt. Dadurch kann die Zuführvorrichtung 22 wiederum an unterschiedliche Formate der Formfolienbahn 14 bzw. der Anordnung der Produktaufnahmen 8 relativ zueinander angepasst werden, ohne dass ein Umrüsten der Zuführvorrichtung 22 erforderlich ist.

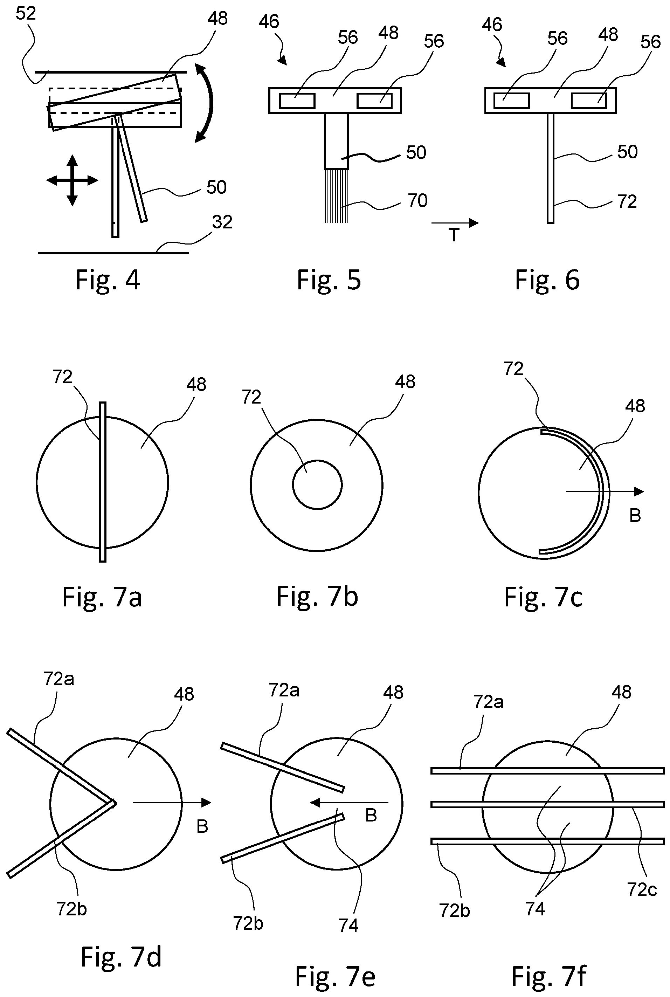

Die zumindest eine Einbringeinrichtung 46 weist vorzugsweise eine Basiseinheit 48 und eine Handhabungseinrichtung 50 auf, wobei die Basiseinheit 48 dazu eingerichtet ist, sich relativ zu einer Antriebsebene 52 der Zuführvorrichtung 22 zu bewegen, und die Handhabungseinrichtung 50 dazu eingerichtet ist, die Produkte 10 zu erfassen und in die Produktaufnahmen 8 zu schieben. Beispielhafte Ausführungsformen der zumindest einen Einbringeinrichtung 46 sind unter Bezugnahme auf Fig. 5 bis 7 detaillierter beschrieben.

Die Antriebsebene 52 ist beispielsweise als Teil des Gehäuses 34 ausgebildet oder in diesem angeordnet, insbesondere oberhalb der und parallel zur Transportebene 32. Die Antriebsebene 52 kann modular aufgebaut sein, wobei die einzelnen Module unabhängig voneinander aktivierbar sind. So kann die Antriebsebene 52 sowohl in der Länge parallel zur Transportrichtung T als auch in der Breite parallel zu einer Querrichtung Q, die senkrecht zur Transportrichtung T und parallel zur Transportebene 32 ausgerichtet ist, angepasst werden.

In der dargestellten Ausführungsform ist eine Mehrzahl von Einbringeinrichtungen 46 vorgesehen, um die Effizienz der Zuführvorrichtung 22 zu erhöhen. Die Einbringeinrichtungen 46 der Mehrzahl von Einbringeinrichtungen 46 sind bevorzugt einzeln ansteuerbar und im Wesentlichen unabhängig voneinander frei beweglich, sodass sie jeweils ein individuelles Bewegungsprofil aufweisen können. Alle bezüglich der zumindest einen Einbringeinrichtung 46 beschriebenen Merkmale können analog auf jede der Mehrzahl von Einbringeinrichtungen 46 zutreffen. Bevorzugt sind die Einbringeinrichtungen 46 wahlweise aktivierbar, sodass die Anzahl der im Einsatz befindlichen Einbringeinrichtungen 46 angepasst werden kann. Insbesondere bei einem modularen Aufbau der Antriebsebene 52 kann somit die Anzahl der Einbringeinrichtungen 46 entsprechend angepasst werden. Wie in Fig. 3 dargestellt, kann die Zuführvorrichtung 22 beispielsweise ein Magazin 54 umfassen, das mit der Antriebsebene 52 in Verbindung steht und in dem Einbringeinrichtungen 46 in einem Wartebereich auf ihren Einsatz warten. Bei Aktivierung der Einbringeinrichtungen 46 können diese in eine Arbeitsposition entlang der Antriebsebene 52 bewegt werden.

Die zumindest eine Einbringeinrichtung 46 weist in der Ebene parallel zur Transportebene 32 zumindest zwei Freiheitsgrade (Translationsfreiheitsgrade) auf und weist bevorzugt bis zu sechs Freiheitsgrade auf, die anhand der Figuren 3 und 4 beschrieben sind. Um parallel zur Transportebene 32 frei beweglich zu sein, kann die zumindest eine Einbringeinrichtung 46 beispielsweise einen ersten Translationsfreiheitsgrad parallel zur Transportrichtung T und einen zweiten Translationsfreiheitsgrad parallel zur Querrichtung Q aufweisen. Wie in Fig. 4 zu sehen, kann die zumindest eine Einbringeinrichtung 46 weiterhin einen dritten Translationsfreiheitsgrad senkrecht zur Transportebene 32 aufweisen. Ferner kann die zumindest eine Einbringeinrichtung 46 drei Rotationsfreiheitsgrade aufweisen, nämlich um eine Achse senkrecht zur Transportebene 32 (siehe Fig. 3) sowie um eine Achse parallel zur Transportrichtung T und um eine Achse parallel zur Querrichtung Q (siehe Fig. 4).

Damit die zumindest eine Einbringeinrichtung 46 die gewünschten Freiheitsgrade aufweisen kann, bilden die Antriebsebene 52 und die Basiseinheit 48 der Einbringeinrichtung 46 bevorzugt ein Planarantriebssystem. Dabei sind die Antriebsebene 52 und die Einbringeinrichtung 46 magnetisch miteinander gekoppelt, beispielsweise indem die Antriebsebene 52 elektromagnetisch ausgebildet ist und die Basiseinheit mindestens einen Permanentmagnet 56 umfasst. Die Einbringeinrichtung 46 kann folglich beliebig entlang der Antriebsebene 52 bewegt werden und schwebt relativ zur Antriebsebene 52 in Abhängigkeit von der Stärke des angelegten Magnetfelds, wie in Fig. 4 gezeigt.

Insbesondere aufgrund der Ausbildung als Planarantriebssystem ist ein Bewegungsprofil der zumindest einen Einbringeinrichtung 46 variabel einstellbar. Das Bewegungsprofil kann beispielsweise eine Bewegungsbahn 58 und/oder eine Bewegungsform, wie zum Beispiel eine translatorische und/oder rotatorische Bewegung, umfassen, wie in Fig. 3 und 4 dargestellt.

In der in Fig. 3 dargestellten Ausführungsform können die Einbringeinrichtungen 46 zum Beispiel in einer vorgegebenen Position rotieren und/oder sich entlang der Bewegungsbahn 58 bewegen, um die auf der Formfolienbahn 14 befindlichen Produkte 10 in die Produktaufnahmen 8 zu befördern bzw. schieben. Eine weitere Einbringeinrichtung 46' kann sich beispielsweise in Querrichtung Q hin- und her bewegen, um überschüssige Produkte 10, die sich in einem Endbereich 59 der Füllstrecke 30 noch auf der Formfolienbahn 14 befinden, von der Füllstrecke 30 zu befördern. Außerdem kann das Bewegungsprofil und/oder die Ausrichtung der Einbringeinrichtung 46 an die Produktaufnahmen 8 angepasst sein. Beispielsweise ist die Handhabungseinrichtung 50 der Einbringeinrichtung 46' parallel zu einer Längsrichtung der Produktaufnahmen 8, hier beide parallel zur Transportrichtung T, ausgerichtet. Erfasst die Einbringeinrichtung 46' ein längliches Produkt 10, wird dieses parallel zur Handhabungseinrichtung 50 und somit parallel zur Produktaufnahme 8 angeordnet, sodass es zuverlässig in die Produktaufnahme 8 geschoben wird.

Grundsätzlich kann die Zuführvorrichtung 22 eine Steuereinrichtung 60 umfassen, die in Fig. 2 angedeutet ist und dazu eingerichtet ist, die zumindest eine Einbringeinrichtung 46 gemäß dem Bewegungsprofil anzusteuern. Hierzu kann die Steuereinrichtung 60 mit der zumindest einen Einbringeinrichtung 46 und/oder der Antriebsebene 52 kommunizierend verbunden sein, insbesondere drahtlos, wie in Fig. 2 durch die gestrichelten Linien angedeutet. Bevorzugt ist die Steuereinrichtung 60 weiterhin dazu eingerichtet, das Bewegungsprofil automatisch und/oder basierend auf einer Nutzereingabe einzustellen. Beispielsweise können unterschiedliche Bewegungsprofile für unterschiedliche Produkte in einem Speicher der Steuereinrichtung 60 hinterlegt sein und von einem Bediener mittels einer Anzeige- und Bedieneinrichtung der Zuführvorrichtung 22 ausgewählt werden.

Zur automatischen Einstellung des Bewegungsprofils kann die Steuereinrichtung 60 dazu eingerichtet sein, das Bewegungsprofil basierend auf einer ersten Größe, die kennzeichnend für eine Ausbildung der Produktaufnahmen 8 ist und/oder basierend auf einer zweiten Größe, die kennzeichnend für eine Anordnung der Produkte 10 ist, anzupassen.

Vorzugsweise umfasst die Zuführvorrichtung 22 hierzu ein Detektionssystem 62, hier mit einem ersten Sensor 64, einem zweiten Sensor 66 und einem dritten Sensor 68, das dazu eingerichtet ist, die erste Größe und/oder die zweite Größe zu erfassen und kommunizierend mit der Steuereinrichtung 60 verbunden ist. In einem Ausführungsbeispiel kann der erste Sensor 64 und/oder der zweite Sensor 66 die Anordnung der Produkte 10 (zweite Größe), insbesondere deren Verteilung entlang der Füllstrecke 30, erfassen und die Steuereinrichtung 60 passt das Bewegungsprofil der zumindest einen Einbringeinrichtung 46 basierend auf der erfassten Anordnung der Produkte 10 an. So können zum Beispiel Bereiche, in denen sich Produkte 10 anhäufen, öfter überstrichen werden als Bereiche mit weniger Produkten 10. Der dritte Sensor 68 kann beispielsweise einen Füllgrad der Produktaufnahmen 8 am Ende der Füllstrecke 30 erfassen, sodass die Steuereinrichtung 60 das Bewegungsprofil der zumindest einen Einbringeinrichtung 46 basierend auf dem erfassten Füllgrad anpassen und diesen somit optimieren kann.

Das erfindungsgemäße Verfahren umfasst das Bewegen der zumindest einen Einbringeinrichtung 46 gemäß dem Bewegungsprofil. Neben dem bereits beschriebenen Einstellen des Bewegungsprofils und dem Anpassen des Bewegungsprofils, vorzugsweise basierend auf der erfassten ersten und/oder zweiten Größe werden weitere vorteilhafte Funktionen bzw. Verfahrensschritte ermöglicht.

Vorzugsweise umfasst das Verfahren das Bestimmen, ob die zweite Größe, wie zum Beispiel der Füllgrad, ein vorbestimmtes Kriterium erfüllt. Wird das vorbestimmte Kriterium nicht erfüllt, können die Schritte des Erfassens der zweiten Größe und des Anpassens des Bewegungsprofils basierend auf der erfassten zweiten Größe wiederholt werden. Dadurch kann eine selbstständige Optimierung des Verfahrens bzw. der Zuführvorrichtung 22 realisiert werden kann. Die Steuereinrichtung 60, das Detektionssystem 62 und die Einbringeinrichtungen 46 können hierzu einen entsprechenden Regelkreis bilden.

Des Weiteren kann das Verfahren das Erfassen einer Kraft, die von der zumindest einen Einbringeinrichtung 46 auf ein Produkt 10 ausgeübt wird, insbesondere mittels der Steuereinrichtung 60, und das Initiieren einer Ausweichbewegung der zumindest einen Einbringeinrichtung 46 umfassen, wenn die erfasste Kraft einen vorbestimmten Grenzwert überschreitet. Zum Beispiel kann die Bewegungsbahn der Einbringeinrichtung 46 geändert werden, um den Produkt 10 auszuweichen oder kann der Abstand der Einbringeinrichtung 46 zur Transportebene 32 verändert werden.

Unterschiedliche Ausführungsformen der zumindest einen Einbringeinrichtung 46 sind nachfolgend unter Bezugnahme auf Fig. 5 bis 7 beschrieben.

In der in Fig. 5 dargestellten Ausführungsform umfasst die Handhabungseinrichtung 50 der Einbringeinrichtung 46 eine Bürste 70 mit einer Vielzahl von flexiblen Borsten, die in Richtung der Transportebene 32 ragen und Produkte 10 erfassen. Mit der Bürste 70 können die Produkte 10 sehr schonend in die Produktaufnahmen 8 geschoben werden.

In der in Fig. 6 dargestellten Ausführungsform umfasst die Handhabungseinrichtung 50 der Einbringeinrichtung 46 zumindest ein Führungselement 72, von dem unterschiedliche Varianten in den Figuren 7a-f dargestellt sind. Das zumindest eine Führungselement 72 kann flexibel oder starr ausgebildet sein, ist aber bevorzugt steifer als die Borsten der Bürste 70. Dadurch kann das zumindest eine Führungselement 72 ein erfasstes Produkt möglichst präzise positionieren.

Sehr einfach ausgebildete Ausführungsformen des Führungselements 72 zum Schieben von Produkten 10 in Produktaufnahmen 8 sind in Fig. 7a und 7b gezeigt. Das Führungselement 72 nach Fig. 7a entspricht dem der Einbringeinrichtung 46' in Fig. 3 und weist eine im Wesentlichen ebene Gestalt mit rechteckigem Querschnitt auf. Wie zu Fig. 3 beschrieben, werden längliche Produkte 10 bei Kontakt mit diesem Führungselement 72 parallel zum Führungselement 72 ausgerichtet und können somit in definierter Ausrichtung in eine Produktaufnahme 8 geschoben werden. Das Führungselement 72 nach Fig. 7b weist einen im Wesentlichen runden Querschnitt auf und ist dadurch unabhängig von seiner Winkelposition zum Erfassen eines Produkts 10 bewegbar.

Die Ausführungsformen nach Fig. 7c-f bringen weitere Vorteile mit sich. Gemäß der Ausführungsform nach Fig. 7c weist das Führungselement 72 eine gekrümmte, vorzugsweise im Wesentlichen halbkreisförmige Form auf. Wird diese Einbringeinrichtung 46 in die durch den Pfeil B gekennzeichnete Richtung bewegt, werden die von der Einbringeinrichtung 46 erfassten Produkte 10 dabei besonders gut verteilt. Dies trifft auch auf die Ausführungsform nach Fig. 7d zu, bei der das Führungselement 72 einen im Wesentlichen V-förmigen Querschnitt aufweist oder zwei im Wesentlichen ebene Führungselemente 72a, 72b vorgesehen sind, die schräg zueinander angeordnet sind und sich in einem Scheitelpunkt treffen.

In der Ausführungsform nach Fig. 7e sind ebenfalls zwei Führungselemente 72a, 72b vorgesehen, die jeweils im Wesentlichen eben ausgebildet und schräg zueinander angeordnet sind. Die Führungselemente 72a, 72b bilden dadurch einen sich in radialer Richtung der Einbringeinrichtung 46 bzw. der Basiseinheit 48 verjüngenden Einlauf. Im Bereich des geringsten Abstands der beiden Führungselemente 72a, 72b sind diese beabstandet zueinander angeordnet, sodass zwischen ihnen ein Zwischenraum 74 ausgebildet ist, durch den die Produkte 10 hindurchtreten können. Diese Ausführungsform eignet sich besonders gut zum Sammeln und Leiten von Produkten 10.

Schließlich sind in der Ausführungsform nach Fig. 7f zumindest drei Führungselemente 72a, 72b, 72c vorgesehen, die im Wesentlichen eben und parallel zueinander ausgebildet sind. Die drei Führungselemente 72a, 72b, 72c sind beabstandet zueinander angeordnet, wobei der Abstand zweier benachbarter Führungselemente 72a, 72b, 72c vorzugsweise derart gewählt ist, dass die Produkte 10 nur in einer bestimmten Orientierung in den Zwischenraum 74 zwischen den Führungselementen 72a, 72b, 72c aufnehmbar sind. Die Zwischenräume 74 können zudem entsprechend den Reihen von Produktaufnahmen 8 ausgebildet sein, sodass in benachbarten Zwischenräumen 74 aufgenommene Produkte 10 einfach und zuverlässig in benachbarte Produktaufnahmen 8 geschoben werden können.

Weitere Ausführungsformen der Führungselemente sowie der gesamten Einbringeinrichtung sind dem Fachmann basierend auf der hierin enthaltenen Beschreibung bevorzugter Ausführungsformen ersichtlich. Merkmale unterschiedlicher Ausführungsformen lassen sich kombinieren. Die Einbringeinrichtung ist nicht auf eine Verwendung in der beschriebenen Zuführvorrichtung bzw. Blistermaschine beschränkt, sondern kann auch in anderen Zuführvorrichtungen Anwendung finden.

## Patentansprüche

1. Zuführvorrichtung (22) zum Zuführen von Produkten (10), insbesondere von medizinischen oder pharmazeutischen Produkten (10), Nahrungs- oder Nahrungsergänzungsmitteln, und Einfügen der Produkte (10) in Produktaufnahmen (8), wobei die Zuführvorrichtung (22) umfasst:
eine Füllstrecke (30), entlang derer die Produktaufnahmen (8) in einer Transportebene (32) in eine Transportrichtung (T) bewegbar sind;
eine Zuführung (40) zum Zuführen der Produkte (10) zur Füllstrecke (30); und
zumindest eine Einbringeinrichtung (46), die dazu eingerichtet ist, die Produkte (10) in die Produktaufnahmen (8) zu schieben;
**dadurch gekennzeichnet, dass**
die zumindest eine Einbringeinrichtung (46) zumindest in einer Ebene (52) parallel zur Transportebene (32) frei beweglich ist.

2. Zuführvorrichtung (22) nach Anspruch 1, **dadurch gekennzeichnet, dass** sie weiterhin eine Steuereinrichtung (60) umfasst, die dazu eingerichtet ist, die zumindest eine Einbringeinrichtung (46) gemäß einem Bewegungsprofil anzusteuern, das variabel einstellbar ist.

3. Zuführvorrichtung (22) nach Anspruch 2, **dadurch gekennzeichnet, dass** die Steuereinrichtung (60) dazu eingerichtet ist, das Bewegungsprofil einzustellen basierend auf einer ersten Größe, die kennzeichnend ist für eine Ausbildung der Produktaufnahmen (8), insbesondere für eine geometrische Form, eine Orientierung und/oder eine Anordnung der Produktaufnahmen (8), und/oder basierend auf einer zweiten Größe, die kennzeichnend ist für eine Anordnung der Produkte (10), insbesondere für eine Verteilung der Produkte (10) entlang der Füllstrecke (30) und/oder einen Füllgrad der Produktaufnahmen (8).

4. Zuführvorrichtung (22) nach Anspruch 2 oder 3, **dadurch gekennzeichnet, dass** die Steuereinrichtung (60) dazu eingerichtet ist, das Bewegungsprofil automatisch und/oder basierend auf einer Nutzereingabe einzustellen.

5. Zuführvorrichtung (22) nach Anspruch 4 in Abhängigkeit von Anspruch 3, **dadurch gekennzeichnet, dass** sie weiterhin ein Detektionssystem (62) umfasst, das dazu eingerichtet ist, die erste Größe und/oder die zweite Größe zu erfassen, und das kommunizierend mit der Steuereinrichtung (60) verbunden ist, die dazu eingereicht ist, das Bewegungsprofil der zumindest einen Einbringeinrichtung (46) basierend auf der erfassten ersten und/oder zweiten Größe einzustellen.

6. Zuführvorrichtung (22) nach einem der Ansprüche 2 bis 5, **dadurch gekennzeichnet, dass** die Steuereinrichtung (60) dazu eingerichtet ist, eine Kraft zu erfassen, mit der die zumindest eine Einbringeinrichtung (46) auf ein Produkt (10) einwirkt.

7. Zuführvorrichtung (22) nach einem der vorangehenden Ansprüche, **dadurch gekennzeichnet, dass** die zumindest eine Einbringeinrichtung (46) sechs Freiheitsgrade aufweist.

8. Zuführvorrichtung (22) nach einem der vorangehenden Ansprüche, **dadurch gekennzeichnet, dass** die zumindest eine Einbringeinrichtung (46) eine Basiseinheit (48) und eine Handhabungseinrichtung (50) umfasst, wobei die Basiseinheit (48) dazu eingerichtet ist, sich relativ zu einer Antriebsebene (52) der Zuführvorrichtung (22) zu bewegen, und die Handhabungseinrichtung (50) an der Basiseinheit (48) angebracht und dazu eingerichtet ist, die Produkte (10) zu erfassen.

9. Zuführvorrichtung (22) nach Anspruch 8, **dadurch gekennzeichnet, dass** die Antriebsebene (52) elektromagnetisch ausgebildet ist und die Basiseinheit (48) einen Permanentmagnet (56) umfasst und relativ zur Antriebsebene (52) frei schwebt.

10. Zuführvorrichtung (22) nach Anspruch 8 oder 9, **dadurch gekennzeichnet, dass** die Handhabungseinrichtung (50) eine Bürste (70) oder zumindest ein Führungselement (72) umfasst, das vorzugsweise flexibel ausgebildet ist.

11. Zuführvorrichtung (22) nach einem der vorangehenden Ansprüche, **dadurch gekennzeichnet, dass** die Zuführvorrichtung (22) eine Mehrzahl von Einbringeinrichtungen (46) umfasst, die einzeln ansteuerbar und im Wesentlichen unabhängig voneinander frei beweglich sind.

12. Blistermaschine (2) zum Verpacken von Produkten (10), insbesondere von medizinischen oder pharmazeutischen Produkten (10), Nahrungs- oder Nahrungsergänzungsmitteln, wobei die Blistermaschine (2) umfasst:
eine Formvorrichtung (20) zum Formen von Produktaufnahmen (8) in Form von Blisterhöfen in eine Formfolie (6);
eine Zuführvorrichtung (22) nach einem der Ansprüche 1 bis 11 zum Zuführen und Einfügen der Produkte (10) in die Produktaufnahmen (8);
eine Siegelvorrichtung (26) zum Siegeln einer Deckfolie (12) an die Formfolie (6) zum Verschließen der Produktaufnahmen (8).

13. Verfahren zum Zuführen von Produkten (10), insbesondere von medizinischen oder pharmazeutischen Produkten (10), Nahrungs- oder Nahrungsergänzungsmitteln, und Einfügen der Produkte (10) in Produktaufnahmen (8), wobei das Verfahren die folgenden Schritte umfasst:
Zuführen der Produkte (10) zu einer Füllstrecke (30), entlang derer die Produktaufnahmen (8) in einer Transportebene (32) in eine Transportrichtung (T) bewegt werden;
Bewegen zumindest einer Einbringeinrichtung (46) gemäß einem Bewegungsprofil und dadurch Einfügen der Produkte (10) in die Produktaufnahmen (8);
**dadurch gekennzeichnet, dass**
die zumindest eine Einbringeinrichtung (46) zumindest in einer Ebene parallel zur Transportebene (32) frei beweglich ist.

14. Verfahren nach Anspruch 13, **dadurch gekennzeichnet, dass** das Bewegungsprofil variabel einstellbar ist und das Verfahren weiterhin umfasst:
Erfassen einer ersten Größe, die kennzeichnend ist für eine Ausbildung der Produktaufnahmen (8), insbesondere für eine geometrische Form, eine Orientierung und/oder eine Anordnung der Produktaufnahmen (8), und/oder einer zweiten Größe, die kennzeichnend ist für eine Anordnung der Produkte (10), insbesondere für eine Verteilung der Produkte (10) entlang der Füllstrecke (30) und/oder einen Füllgrad der Produktaufnahmen (8), mittels eines Detektionssystems (62); und
Anpassen des Bewegungsprofils der zumindest einen Einbringeinrichtung (46) basierend auf der erfassten ersten und/oder zweiten Größe.

15. Verfahren nach Anspruch 14, **dadurch gekennzeichnet, dass** das Verfahren weiterhin umfasst:
Bestimmen, ob die zweite Größe ein vorbestimmtes Kriterium erfüllt; und
falls die zweite Größe das vorbestimmte Kriterium nicht erfüllt, Wiederholen der Schritte des Erfassens der zweiten Größe, des Anpassens des Bewegungsprofils basierend auf der erfassten zweiten Größe, und des Bestimmens, ob das vorbestimmte Kriterium erfüllt wird, solange bis das vorbestimmte Kriterium erfüllt wird.

16. Verfahren nach einem der Ansprüche 13 bis 15, **dadurch gekennzeichnet, dass** das Verfahren weiterhin umfasst:
Erfassen, ob in einem Endbereich (59) der Füllstrecke (30) alle Produktaufnahmen (8) gefüllt sind und sich noch überschüssige Produkte (10) auf der Füllstrecke (30) befinden; und
Befördern aller überschüssigen Produkte (10) von der Füllstrecke (30) mittels der zumindest einen Einbringeinrichtung (46).

17. Verfahren nach einem der Ansprüche 13 bis 16, **dadurch gekennzeichnet, dass** das Verfahren weiterhin umfasst:
Erfassen einer Kraft, die von der zumindest einen Einbringeinrichtung (46) auf ein Produkt (10) ausgeübt wird; und
Initiieren einer Ausweichbewegung der zumindest einen Einbringeinrichtung (46), wenn die erfasste Kraft einen vorbestimmten Grenzwert überschreitet.

## Claims

1. A feeding device (22) for feeding products (10), in particular medicinal or pharmaceutical products (10), food or food supplements, and inserting the products (10) into product receptacles (8), wherein the feeding device (22) comprises:
a filling section (30) along which the product receptacles (8) are movable in a transport plane (32) in a transport direction (T);
a feed (40) for feeding the products (10) to the filling section (30); and
at least one introducing device (46) which is configured to push the products (10) into the product receptacles (8);
**characterised in that**
the at least one introducing device (46) is freely movable at least in a plane (52) parallel to the transport plane (32).

2. The feeding device (22) according to claim 1, **characterised in that** it further comprises a control device (60) which is configured to control the at least one introducing device (46) according to a movement profile which is variably adjustable.

3. The feeding device (22) according to claim 2, **characterised in that** the control device (60) is configured to adjust the movement profile based on a first variable, which is characteristic of a configuration of the product receptacles (8), in particular of a geometric shape, an orientation and/or an arrangement of the product receptacles (8), and/or based on a second variable, which is characteristic of an arrangement of the products (10), in particular of a distribution of the products (10) along the filling section (30) and/or a filling degree of the product receptacles (8).

4. The feeding device (22) according to claim 2 or 3, **characterised in that** the control device (60) is configured to adjust the movement profile automatically and/or based on a user input.

5. The feeding device (22) according to claim 4 in dependence on claim 3, **characterised in that** it further comprises a detection system (62) which is configured to detect the first variable and/or the second variable and which is communicatively connected to the control device (60), which is configured to adjust the movement profile of the at least one introducing device (46) on the basis of the detected first and/or second variable.

6. The feeding device (22) according to any one of claims 2 to 5, **characterised in that** the control device (60) is configured to detect a force with which the at least one introducing device (46) acts on a product (10).

7. The feeding device (22) according to any one of the preceding claims, **characterised in that** the at least one introducing device (46) has six degrees of freedom.

8. The feeding device (22) according to any one of the preceding claims, **characterised in that** the at least one introducing device (46) comprises a base unit (48) and a handling device (50), wherein the base unit (48) is configured to move relative to a drive plane (52) of the feeding device (22), and the handling device (50) is mounted on the base unit (48) and is configured to act on the products (10).

9. The feeding device (22) according to claim 8, **characterised in that** the drive plane (52) is electromagnetic and the base unit (48) comprises a permanent magnet (56) and floats freely relative to the drive plane (52).

10. The feeding device (22) according to claim 8 or 9, **characterised in that** the handling device (50) comprises a brush (70) or at least one guide element (72), which is preferably flexible.

11. The feeding device (22) according to any one of the preceding claims, **characterised in that** the feeding device (22) comprises a plurality of introducing devices (46), which can be controlled individually and are freely movable substantially independently of one another.

12. A blister machine (2) for packaging products (10), in particular medicinal or pharmaceutical products (10), food or food supplements, wherein the blister machine (2) comprises:
a forming device (20) for forming product receptacles (8) in the form of blister cavities into a shaped film (6);
a feeding device (22) according to any one of claims 1 to 11 for feeding and inserting the products (10) into the product receptacles (8);
a sealing device (26) for sealing a cover film (12) to the shaped film (6) for closing the product receptacles (8).

13. A method for feeding products (10), in particular medicinal or pharmaceutical products (10), food or food supplements, and inserting the products (10) into product receptacles (8), wherein the method comprises the steps of:
feeding the products (10) to a filling section (30), along which the product receptacles (8) are moved in a transport direction (T) in a transport plane (32);
moving at least one introducing device (46) according to a movement profile and thereby inserting the products (10) into the product receptacles (8);
**characterised in that**
the at least one introducing device (46) is freely movable at least in a plane parallel to the transport plane (32).

14. The method according to claim 13, **characterised in that** the movement profile is variably adjustable and the method further comprises:
detecting a first variable, which is characteristic of a formation of the product receptacles (8), in particular of a geometric shape, an orientation and/or an arrangement of the product receptacles (8), and/or a second variable, which is characteristic of an arrangement of the products (10), in particular of a distribution of the products (10) along the filling section (30) and/or a filling degree of the product receptacles (8), by means of a detection system (62); and
adjusting the movement profile of the at least one introducing device (46) based on the detected first and/or second variable.

15. The method according to claim 14, **characterised in that** the method further comprises:
determining whether the second variable meets a predetermined criterion; and
if the second variable does not meet the predetermined criterion, repeating the steps of detecting the second variable, adjusting the movement profile based on the detected second variable, and determining whether the predetermined criterion is now met until the predetermined criterion is met.

16. The method according to any one of claims 13 to 15, **characterised in that** the method further comprises:
detecting whether all product receptacles (8) are filled in an end region (59) of the filling section (30) and excess products (10) are still located on the filling section (30); and
conveying all excess products (10) from the filling section (30) by means of the at least one introducing device (46).

17. The method according to any one of claims 13 to 16, **characterised in that** the method further comprises:
detecting a force exerted by the at least one introducing device (46) on a product (10); and
initiating an escape movement of the at least one introducing device (46) when the detected force exceeds a predetermined limit value.

## Revendications

1. Dispositif d'alimentation (22), destiné à alimenter des produits (10), notamment des produits (10) médicaux ou pharmaceutiques, des produits alimentaires ou des compléments alimentaires et à insérer les produits (10) dans des réceptacles (8) pour produits, le dispositif d'alimentation (22) comprenant :
un trajet de remplissage (30), le long duquel les réceptacles (8) pour produits sont déplaçables dans un plan de transport (32) dans une direction de transport (T) ;
une alimentation (40), destinée à alimenter les produits (10) vers le trajet de remplissage (30) ; et
au moins un système d'introduction (46), qui est configuré pour pousser les produits (10) dans les réceptacles (8) pour produits ;
**caractérisé en ce que**
l'au moins un système d'introduction (46) est librement déplaçable au moins dans un plan (52) à la parallèle du plan de transport (32).

2. Dispositif d'alimentation (22) selon la revendication 1, **caractérisé en ce qu'**il comprend par ailleurs un système de commande (60) qui est configuré pour activer l'au moins un système d'introduction (46) selon un profil de déplacement qui est réglable de manière variable.

3. Dispositif d'alimentation (22) selon la revendication 2, **caractérisé en ce que** le système de commande (60) est configuré pour régler le profil de déplacement sur la base d'une première grandeur qui est caractéristique pour une conception des réceptacles, (8) pour produits, notamment pour une forme géométrique, une orientation et / ou un placement des réceptacles (8) pour produits, et / ou sur la base d'une deuxième grandeur, qui est caractéristique pour un placement des produits (10), notamment pour une distribution des produits (10) le long du trajet de remplissage (30) et / ou pour un niveau de remplissage des réceptacles (8) pour produits.

4. Dispositif d'alimentation (22) selon la revendication 2 ou 3, **caractérisé en ce que** le système de commande (60) est configure pour régler le profil de déplacement automatiquement et / ou sur la base d'une saisie par un opérateur.

5. Dispositif d'alimentation (22) selon la revendication 4, en fonction de la revendication 3, **caractérisé en ce qu'**il comprend par ailleurs un système de détection (62) qui est configuré pour détecter la première grandeur et / ou la deuxième grandeur et qui est connecté en communication avec le système de commande (60), qui est configuré pour régler le profil de déplacement de l'au moins un système d'introduction (46) sur la base de la première et / ou de la deuxième grandeur détectée.

6. Dispositif d'alimentation (22) selon l'une quelconque des revendications 2 à 5, **caractérisé en ce que** le système de commande (60) est configuré pour détecter une force avec laquelle l'au moins un système d'introduction (46) agit sur un produit (10).

7. Dispositif d'alimentation (22) selon l'une quelconque des revendications précédentes, **caractérisé en ce que** l'au moins un système d'introduction (46) comporte six degrés de liberté.

8. Dispositif d'alimentation (22) selon l'une quelconque des revendications précédentes, **caractérisé en ce que** l'au moins un système d'introduction (46) comprend une unité de base (48) et un système de manipulation (50), l'unité de base (48) étant configurée pour se déplacer par rapport à un plan d'entraînement (52) du dispositif d'alimentation (22) et le système de manipulation (50) étant monté sur l'unité de base (48) et étant configuré pour saisir les produits (10).

9. Dispositif d'alimentation (22) selon la revendication 8, **caractérisé en ce que** le plan d'entraînement (52) est conçu sous forme électromagnétique et l'unité de base (48) comprend un aimant permanent (56) et flotte librement par rapport au plan d'entraînement (52).

10. Dispositif d'alimentation (22) selon la revendication 8 ou 9, **caractérisé en ce que** le système de manipulation (50) comprend une brosse (70) ou au moins un élément de guidage (72) qui est conçu de préférence de forme souple.

11. Dispositif d'alimentation (22) selon l'une quelconque des revendications précédentes, **caractérisé en ce que** le dispositif d'alimentation (22) comprend une pluralité de systèmes d'introduction (46) qui sont activables individuellement et qui sont librement déplaçables de manière sensiblement indépendante les uns des autres.

12. Machine d'emballage sous blister (2), destinée à emballer des produits (10), notamment des produits (10) médicaux ou pharmaceutiques, des produits d'alimentation ou des compléments alimentaires, la machine d'emballage sous blister (2) comprenant :
un dispositif de façonnage (20), destiné à façonner dans un film de façonnage (6) des réceptacles (8) pour produits sous la forme de coques en blister ;
un dispositif d'alimentation (22) selon l'une quelconque des revendications 1 à 11, destiné à alimenter et à insérer des produits (10) dans les réceptacles (8) pour produits ;
un dispositif de scellement (26), destiné à sceller un film de recouvrement (12) au film de façonnage (6), pour fermer les réceptacles (8) pour produits.

13. Procédé, destiné à alimenter des produits (10), notamment des produits (10) médicaux ou pharmaceutiques, des produits alimentaires ou des compléments alimentaires et à insérer les produits (10) dans des réceptacles (8) pour produits, le procédé comprenant les étapes suivantes, consistant à :
alimenter les produits (10) vers un trajet de remplissage (30), le long duquel les réceptacles (8) pour produits sont déplacés dans un plan de transport (32) dans une direction de transport (T) ;
déplacer au moins un système d'introduction (46) selon un profil de déplacement et de ce fait, insérer les produits (10) dans les réceptacles (8) pour produits ;
**caractérisé en ce que**
l'au moins un système d'introduction (46) est librement déplaçable au moins dans un plan à la parallèle du plan de transport (32).

14. Procédé selon la revendication 13, **caractérisé en ce que** le profil de déplacement est réglable de manière variable et le procédé comprend par ailleurs :
la détection au moyen d'un système de détection (62) d'une première grandeur qui est caractéristique pour une conception des réceptacles (8) pour produits, notamment pour une forme géométrique, une orientation et / ou un placement des réceptacles (8) pour produits, et / ou d'une deuxième grandeur, qui est caractéristique pour un placement des produits (10), notamment pour une distribution des produits (10) le long du trajet de remplissage (30) et / ou un niveau de remplissage des réceptacles (8) pour produits ; et
l'adaptation du profil de déplacement de l'au moins un système d'introduction (46), sur la base de la première et / ou de la deuxième grandeur détectée.

15. Procédé selon la revendication 14, **caractérisé en ce que** le procédé comprend par ailleurs :
la détermination si la deuxième grandeur satisfait à un critère prédéterminé ; et
si la deuxième grandeur ne satisfait pas au critère déterminé, la réitération des étapes consistant à détecter la deuxième grandeur, à adapter le profil de déplacement sur la base de la deuxième grandeur détectée et à déterminer s'il est satisfait au critère prédéterminé, jusqu'à ce qu'il soit satisfait au critère prédéterminé.

16. Procédé selon l'une quelconque des revendications 13 à 15, **caractérisé en ce que** le procédé comprend par ailleurs :
la détection, si dans une zone d'extrémité (59) du trajet de remplissage (30), tous les réceptacles (8) pour produits sont remplis et si des produits (10) excédentaires se trouvent encore sur le trajet de remplissage (30) ; et
l'acheminement de tous les produits (10) excédentaires à partir du trajet de remplissage (30) au moyen de l'au moins un système d'introduction (46).

17. Procédé selon l'une quelconque des revendications 13 à 16, **caractérisé en ce que** le procédé comprend par ailleurs :
la détection d'une force qui est exercée par l'au moins un système d'introduction (46) sur un produit (10) ; et
l'initiation d'un déplacement d'évitement de l'au moins un système d'introduction (46), si la force détectée dépasse une valeur limite prédéfinie.
